# EUROPEAN PATENT SPECIFICATION

(11) **EP 2 738 216 B1**
(45) Date of publication and mention of the grant of the patent: **07.01.2015**
(21) Application number: 12194871.5
(22) Date of filing: 29.11.2012
(51) Int. Cl.: C08L 23/12

(54) **Soft polypropylene composition with low n-hexane solubles**
Weiche Polypropylenzusammensetzung mit löslichen Stoffen mit geringem n-Hexan-Gehalt
Composition de polypropylène doux à solubles de n-hexane faibles

(43) Date of publication of application: 04.06.2014
(73) Proprietor: Borealis AG, 1220 Vienna (AT)
(72) Inventor: Pham, Tung, 4040 Linz (AT); Kulshreshta, Bhawna, 4020 Linz (AT)
(74) Representative: Lux, Berthold

(56) References cited:
- EP-A1- 0 942 021
- EP-A1- 2 325 248
- US-A1- 2010 125 114
- US-A1- 2011 250 448

## Description

The present invention is directed to a new soft polypropylene composition with low n-hexane solubles and articles made therefrom.

Polymers are increasingly used in different demanding applications. At the same time there is a continuous seek for tailored compositions which meet the requirements of these applications. The demands can be challenging, since many polymer properties are directly or indirectly interrelated. For instance in the field of injection moulding, in particular of injection mouldable soft tubes for food, cosmetic or pharmaceutical packaging applications, it is desired to obtain an optimum balance of processability and appearance properties, thereby fulfilling all regulatory requirements.

Heterophasic systems are known for its good impact behavior. Heterophasic propylene copolymers are well known in the art. Such heterophasic propylene copolymers comprise a matrix being either a propylene homopolymer or a random propylene copolymer in which an elastomeric copolymer is dispersed. Thus the polypropylene matrix contains (finely) dispersed inclusions being not part of the matrix and said inclusions contain the elastomeric copolymer. The term inclusion indicates that the matrix and the inclusion form different phases within the heterophasic propylene copolymer, said inclusions are for instance visible by high resolution microscopy, like electron microscopy or scanning force microscopy.

Accordingly it is the object of the present invention to provide a soft polymer composition with an optimum balance of processability, softness, transparency and low n-hexane extractables.

The finding of the present invention is to provide a two phase blend of polypropylene homopolymer with high molecular weight thermoplastic elastomer.

Accordingly, the present invention is directed to a polypropylene composition having a melt flow rate MFR₂ (230 °C) measured according to ISO 1133 of at least 85 g/10min, said composition comprises a two phase blend of
(a) a polypropylene homopolymer matrix (PM) having a melt flow rate MFR₂ (230 °C) measured according to ISO 1133 of at least 400 g/10min, and
(b) 25 to 45 wt% of a propylene based thermoplastic elastomer (PTE) having a melt flow rate MFR₂ (230 °C) measured according to ISO 1133 of at most 17 g/10min dispersed in the polypropylene polymer matrix (PM).

It has surprisingly been found that the two phase blend of polypropylene homopolymer with high molecular weight thermoplastic elastomer (PTE) according to present invention provides an optimum balance of processability, softness, transparency and low n-hexane extractables thus enabling the resin to be used in food packaging applications. The material is ideal for injection mouldable articles, in particular for producing injection mouldable soft tubes for food packaging applications. The material can also be used for cosmetic and pharmaceutical packaging.

In the following the invention is defined in more detail.

### Polypropylene composition

As indicated above the instant polypropylene composition is featured by a rather high melt flow rate. Accordingly it is preferred that the instant polypropylene composition has a melt flow rate MFR₂ (230 °C) measured according to ISO 1133 of at least 85 g/10min, preferably of at least 90 g/10min, more preferably of at least 95 g/10min, yet more preferably of at least 100 g/10min. Upper ranges are preferably not more than 350 g/10min, more preferably 300 g/10 min, yet more preferably 275g/10min, still more preferably 260 g/10min. It is to be understood that all lower limits may be combined with all upper limits, and all of these combination as to be regarded as being disclosed and preferred, such as 85 to 350 g/10min, 85 to 300 g/10min, 85 to 275 g/10min, 85 to 260 g/10min, 90 to 350 g/10min, 90 to 300 g/10min, 90 to 275 g/10min, 90 to 260 g/10min, 95 to 350 g/10min, 95 to 300 g/10min, 95 to 275 g/10min, 95 to 260 g/10min, 100 to 350 g/10min, 100 to 300 g/10min, 100 to 275 g/10min, and 100 to 260 g/10min. Particularly preferred are the ranges of 85 to 350 g/10min, still more preferably in the range of 85 to 300 g/10min, yet more preferably in the range of 85 to 275 g/10min, still yet more preferably in the range of 95 to 260 g/10min.

A further characteristic of the instant polypropylene composition is its low or reduced amount of n-hexane solubles, while maintaining an optimum balance of flow, stiffness, softness and transparency. Preferably, the amount of n-hexane solubles in the polypropylene composition is at most 6.8 wt%, preferably at most 6.5 wt%, more preferably at most 6.0 wt%, and still more preferably at most 5.8 wt%. In most preferred examples, the amount of n-hexane solubles in the polypropylene composition is at most 5.0 wt%, or even at most 4.5 wt%.

The xylene cold soluble (XCS) fraction of the polypropylene composition is at least 20 wt%, preferably at least 25 wt% and more preferably at least 27 wt%. Upper ranges are preferably not more than 50 wt%, more preferably not more than 45 wt% and still more preferably not more than 42 wt%. It is to be understood that all lower limits may be combined with all upper limits, and all of these combinations as to be regarded as being disclosed and preferred, such as 20 to 50 wt%, 20 to 45 wt%, 20 to 42 wt%, 25 to 50 wt%, 25 to 45 wt%, 25 to 42 wt%, 27 to 50 wt%, 27 to 45 wt%, and 27 to 43 wt%.

A further characteristic of the polypropylene composition is that its softness is maintained. Accordingly it is preferred that the polypropylene composition has a flexural modulus measured on injection molded specimens of 80 x 10 x 4 mm³ according to ISO 178 of not more than 600 MPa, more preferably of below 550 MPa, still more preferably of equal or below 500 MPa, yet more preferably in the range of 200 to below 550 MPa, still yet more preferably in the range of 250 to 500 MPa.

Moreover, the instant polypropylene composition maintains a good impact behavior (at 23 °C), which impact is at least 7 kJ/m², preferably at least 15 kJ/m², more preferably in the range of 7 to 50 kJ/m², still more preferably in the range of 7 to 30 kJ/m².

In one preferred embodiment, the inventive polypropylene composition comprises 25 to 45 wt% of the propylene based thermoplastic elastomer (PTE), more preferably 27 to 43 wt%, still more preferably 25 to 35 wt%, based on the total polypropylene composition.

In one preferred embodiment, the inventive polypropylene composition comprises 55 to 75 wt% of the polypropylene homopolymer matrix (PM), more preferably 57 to 73 wt%, still more preferably 65 to 75 wt%, based on the total polypropylene composition.

In one preferred embodiment, the inventive polypropylene composition comprises 0.1 to 5 wt% of one or more additives as defined herein below.

It is to be understood that the polypropylene composition and in particular the two phase blend according to the present invention may contain further additives but no other polyolefin, except of the above-mentioned polypropylene matrix PM and the thermoplastic elastomer PTE, in an amount exceeding 5 wt-%, more preferably not exceeding 3 wt.-% based on the total amount of polypropylene composition.

The expression two phase system indicates that the polypropylene homopolymer matrix (PM) and the high molecular weight thermoplastic elastomer (PTE) are not miscible and form separate phases, which are for instance visible by high resolution microscopy, like electron microscopy or scanning force microscopy. Preferably the high molecular weight thermoplastic elastomer (PTE) forms inclusions within the polypropylene homopolymer matrix (PM). In other words the polypropylene composition according to this invention is regarded as a heterophasic system.

In the following the individual components are defined in more detail.

### Polypropylene homopolymer matrix (PM)

One essential component of the instant polypropylene composition is the polypropylene homopolymer matrix (PM). The expression homopolymer used in the instant invention relates to a polypropylene that consists substantially, i.e. of at least 99.5 wt.-%, more preferably of at least 99.8 wt.-%, of propylene units. In a preferred embodiment only propylene units in the propylene homopolymer are detectable.

The polypropylene homopolymer matrix (PM) according to the invention has a melt flow rate MFR₂ (230 °C) measured according to ISO 1133 of at least 450 g/10min, preferably of at least 550 g/10min, more preferably of at least 650 g/10min, yet more preferably of at least 750 g/10min, still yet more preferably of at least 850 g/10min. Upper ranges are preferably not more than 1'550 g/10min, more preferably 1'450 g/10 min, or 1'350 g/10min. It is to be understood that all lower limits may be combined with all upper limits, and all of these combination as to be regarded as being disclosed and preferred, such as 450 to 1'550 g/10 min, 450 to 1'450 g/10 min, 450 to 1'350 g/10 min, 550 to 1'550 g/10 min, 550 to 1'450 g/10 min, 550 to 1'350 g/10 min, 650 to 1'550 g/10 min, 650 to 1'450 g/10 min, 650 to 1'350 g/10 min, 750 to 1'550 g/10 min, 750 to 1'450 g/10 min, 750 to 1'350 g/10 min, 850 to 1'550 g/10 min, 850 to 1'450 g/10 min, or 850 to 1'350 g/10 min. Particularly preferred are the ranges of 450 to 1'550 g/10min, more preferably in the range of 550 to 1'450 g/10min, still more preferably in the range of 650 to 1'350 g/10min., yet more preferably in the range of 750 to 1'350 g/10min, still yet more preferably in the range of 850 to 1'350 g/10min.

Preferably the polypropylene homopolymer matrix (PM) is vis-broken. The vis-breaking may be carried out in any known manner, but typically the present invention envisages chemical vis-breaking using a peroxide vis-breaking agent. Typical vis-breaking agents are 2,5-dimethyl-2,5-bis(tert.butyl-peroxy)hexane (DHBP) (for instance sold under the tradenames Luperox 101 and Trigonox 101), 2,5-dimethyl-2,5-bis(tert.butyl-peroxy)hexyne-3 (DYBP) (for instance sold under the tradenames Luperox 130 and Trigonox 145), dicumyl-peroxide (DCUP) (for instance sold under the tradenames Luperox DC and Perkadox BC), di-tert.butyl-peroxide (DTBP) (for instance sold under the tradenames Trigonox B and Luperox Di), tert.butyl-cumyl-peroxide (BCUP) (for instance sold under the tradenames Trigonox T and Luperox 801) and bis (tert.butylperoxy-isopropyl)benzene (DIPP) (for instance sold under the tradenames Perkadox 14S and Lupperox DC). Suitable amounts of peroxide to be employed in accordance with the present invention are in principle known to the skilled person and can easily be calculated on the basis of the amount of the polymer to be treated. Typical amounts of peroxide visbreaking agent are from 0.005 to 0.5 wt.-%, more preferably from 0.005 to 0.2 wt.-%, based on the amount of polymer employed.

The polypropylene homopolymer matrix (PM) exhibits a high crystallinity. Thereby, the xylene cold soluble (XCS) fraction measured according to according ISO 16152 (25 °C) of the polypropylene homopolymer matrix (PM) is at most 10 wt%, is at most 8 wt%, preferably at most 6 wt%, more preferably at most 5 wt% and yet most preferably at most 4 wt%. Hence, the xylene cold soluble (XCS) content ranges from 0.5 to 8 wt%, preferably from 0.5 to 6 wt%, more preferably from 0.5 to 5 wt% and yet most preferably from 0.5 to 4 wt%.

The melting temperature (Tₘ) of the polypropylene homopolymer matrix (PM) determined by differential scanning calorimetry (DSC) according to ISO 11357-3 is at least 140°C, preferably at least 145°C; more preferably at least 150°C, more preferably at least 155°C,. Upper ranges are preferably not more than 170°C, more preferably not more than 165°C, even more preferably not more than 160°C. It is to be understood that all lower limits may be combined with all upper limits, and all of these combination as to be regarded as being disclosed and preferred, such as 140 to 170°C, 145 to 165°C, 150 to 165°C, 155 to 165°C, 150 to 160°C, and 155 to 160°C.

The polypropylene homopolymer matrix (PM) according to the invention is commercially available and may be produced using a Ziegler-Natta catalyst or a metallocene, preferably a Ziegler-Natta catalyst. It may be a monomodal or a bi- or multimodal propylene homopolymer. Preferably, it is a monomodal propylene homopolymer.

Monomodal propylene homopolymers are preferably produced in single stage processes, for instance in a single reactor such as a slurry reactor like a loop-reactor. The precise control of the polymerization conditions and reaction parameters is within the skill of the art.

The process may comprise also a prepolymerisation with the catalyst system, comprising a Ziegler-Natta procatalyst, an external donor and optionally a cocatalyst.
It is also possible to add other components to the prepolymerization stage. Thus, hydrogen may be added into the prepolymerization stage to control the molecular weight of the prepolymer as is known in the art. Further, antistatic additive may be used to prevent the particles from adhering to each other or to the walls of the reactor.
The precise control of the prepolymerization conditions and reaction parameters is within the skill of the art.

In order to obtain multimodal polypropylene homopolymers, multistage processes may be used. In such case a "loop-gas phase"-process is preferred, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol® process of Basell.

The polypropylene homopolymers used for the polypropylene homopolymer matrix (PM) are known in the art, and examples thereof are commercially available. One preferred example is Borealis Borflow™ HL512FB.

### Propylene based thermoplastic elastomer (PTE)

The other essential component of the polypropylene composition is a propylene based thermoplastic elastomer (PTE) having a melt flow rate MFR₂ (230 °C) measured according to ISO 1133 in the range of at most 17 g/10min, preferably of at most 14.5 g/10min, more preferably at most 12 g/10 min, even more preferably at most 10 g/10min, yet more preferably at most 8 g/10min, yet more preferably at most 6.5 g/10min, and yet more preferably at most 5.0 g/10min. Lower limits are hence preferably not lower than 0.5 g/10min, more preferably not lower than 1.0 g/10min and more preferably not lower than 1.5 g/10min.

It is to be understood that all lower limits may be combined with all upper limits, and all of these combination as to be regarded as being disclosed and preferred, such as 0,5 g/10min to 17 g/10min, 0,5 g/10min to 14.5 g/10min, 0,5 g/10min to 12 g/10 min, 0,5 g/10min to 10 g/10min, 0,5 g/10min to 8 g/10min, 0.5 g/10min to 6.5 g/10min, 0,5 g/10min to 5 g/10min, 1 g/10min to 17 g/10min, 1 g/10min to 14.5 g/10min, 1 g/10min to 12 g/10 min, 1 g/10min to 10 g/10min, 1 g/10min to 8 g/10min, 1 g/10min to 6.5 g/10min, 1 g/10min to 5 g/10min, 1,5 g/10min to 17 g/10min, 1,5 g/10min to 14.5 g/10min, 1,5 g/10min to 12 g/10 min, 1,5 g/10min to 10 g/10min, 1,5 g/10min to 8 g/10min, 1,5 g/10min to 6.5 g/10min, 1,5 g/10min to 5 g/10min. Particularly preferred are the ranges of 0.5 to 17 g/10min, more preferably in the range of 0.5 to 14.5 g/10min, still more preferably in the range of 0.5 to 12 g/10min., yet more preferably in the range of 0.5 to 10 g/10min, still yet more preferably in the range of 0.5 to 6.5 g/10min. The propylene based thermoplastic elastomer (PTE) with the MFR₂ described herein is dispersed in the polypropylene polymer matrix (PM).

Further, the propylene based thermoplastic elastomer (PTE) preferably has a density of below 920 kg/m³, more preferably of below 910 kg/m³, still more preferably in the range of 800 to 920 kg/m³, yet more preferably in the range of 840 to 880 kg/m³ and most preferably in the range of 840 to below 870 kg/m³, like in the range of 840 to 860 kg/m³.

Moreover, the propylene based thermoplastic elastomer (PTE) is featured by rather low crystallinity. Low crystalline polymers have a rather low melting temperature. Accordingly the propylene based thermoplastic elastomer (PTE) according to this invention has a melting temperature of below 120 °C, preferably below 110 °C, more preferably below 100 °C, still more preferably in the range of 25 to below 120 °C, yet more preferably in the range of 35 to 110 °C.

The propylene based thermoplastic elastomer (PTE) is a propylene copolymer comprising propylene monomer units and comonomer units selected from ethylene, 1-butene,1-pentene, 1-hexene, 1-heptene and 1-octene, preferably the comonomer is selected from 1-octene and ethylene, the latter especially preferred. Preferably the comonomer content, is 6 to equal or below 25 wt.-%, more preferably 7 to 20 wt.-%, like 7.0 to 17.0 wt.-%. Particularly preferred is an ethylene comonomer content of 6 to equal or below 25 wt.-%, more preferably 7 to 20 wt.-%, like 7.0 to 17.0 wt.-%.

Preferably the propylene based thermoplastic elastomer (PTE) according to this invention has been produced in the presence of a metallocene catalyst.

The propylene based thermoplastic elastomers (PTE) according to this invention are known in the art. Typical commercial products are some high molecular weight grades of Vistamaxx polypropylene grades of Exxon Mobil, Versify polypropylene grades of Dow, Tafmer polypropylene and VLDPE grades of Mitsui, as well as the TafmerBL polybutene grades of Mitsui and Koattro polybutene grades of Basell

The polymer composition may contain additives known in the art, like antioxidants, acid scavengers, nucleating agents, antiblocking agents, slip agents and antistatic agents. Typically the composition may contain not more than 5 wt%, yet more preferably not more than 3 wt% of additives mentioned herein. In case one or more additive(s) are added, the following ranges are preferred: 0.1 to 5 wt%, 0.1 to 3 wt%, 0.3 to 5 wt%, 0.3 to 3 wt%, 0.5 to 5 wt%, or 0.5 to 3 wt%.

In one preferred embodiment of the invention, the polypropylene composition comprises 0.1 to 5 wt% of one or more additives selected from the group of an antiblocking agent (AB), slip agent (SA), an antioxidant, an acid scavenger, a nucleating agent, or an antistatic agent. Preferred additives are antiblocking agents, slip agents, antioxidants, acid scavengers and antistatic agents. More preferred are antiblocking agents, slip agents and antioxidants.

It is to be understood that the addition of an additive is common in the art. Hence, it is to be regarded as disclosed and known to the skilled person that any of the herein mentioned additives, in the amounts mentioned herein, may be singularly or in combination with others added to any of the polypropylene compositions and combinations disclosed herein.

### Preparation of the polypropylene composition

The polypropylene composition of the present invention can be prepared by any suitable method known in the art, such as by blending the polypropylene homopolymer matrix (PM), the propylene based thermoplastic elastomer (PTE), and optionally additives, either directly, e.g., in an extruder, such that the same extruder is used to make the finished product, or by pre-melt mixing in a separate mixer or extruder. For mixing, a conventional compounding or blending apparatus, e.g. a Banbury mixer, a 2- roll rubber mill, Buss-co-kneader or a twin screw extruder may be used. Also the other optional components, like the antiblocking agent and the slip agent, are added in the extruder.

### Articles

The present invention is not only directed to the polypropylene composition as such but also to the articles comprising the instant polypropylene composition. Accordingly the article comprises at least 70 wt.-%, like 70 to 99 wt.-% or 70 to 100 wt.-%, preferably at least 80 wt.-%, like 80 to 99 wt.-% or 80 to 100 wt.-%, more preferably at least 95 wt.-%, like 95 to 99 wt.-% or 95 to 100 wt.-%, yet more preferably consists of, the instant polypropylene composition.

The articles according to this invention are injection molded articles, in particular thin-walled articles, like thin-wall tubes. The term "thin-walled" shall preferably express a thickness of not more than 2 mm, more preferably in the range of 0.05 to 2.00 mm, yet more preferably in the range of 0.10 to 1.70, still more preferably in the range of 0.18 to 1.20 mm, still yet more preferably in the range of 0.25 to 1.00 mm, like in the range of 0.30 to 0.60 mm.

The present invention will now be described in further detail by the examples provided below.

### EXAMPLES

### Measuring Methods and Definitions

In the whole application it is to be understood that the terms "number x to number y" means "number x to equal or below number y".
The **MFR₂ (230** °C) was measured according to ISO 1133 (230 °C, 2.16 kg load).
The **MFR₂ (190 °C)** was measured according to ISO 1133 (190 °C, 2.16 kg load).
The **content of xylene cold solubles (XCS, wt.-%)** was determined at 25 °C according ISO 16152; first edition; 2005-07-01.
**The comonomer content of the propylene based thermoplastic elastomer (PTE)** was determined according ASTM D 3900
**Comonomer content for the matrix (M)**, especially ethylene content is measured with Fourier transform infrared spectroscopy (FTIR) calibrated with ¹³C-NMR. When measuring the ethylene content in polypropylene, a thin film of the sample (thickness about 250 µm) was prepared by hot-pressing. The area of absorption peaks 720 and 733 cm⁻¹ for propyleneethylene-copolymers was measured with Perkin Elmer FTIR 1600 spectrometer. Propylene-1-butene-copolymers were evaluated at 767 cm⁻¹. The method was calibrated by ethylene content data measured by ¹³C-NMR. See also "IR-Spektroskopie für Anwender"; WILEY-VCH, 1997 and "Validierung in der Analytik", WILEY-VCH, 1997
**Flexural Modulus:** The flexural modulus was determined in 3-point-bending according to ISO 178 on injection molded specimens of 80 x 10 x 4 mm prepared in accordance with ISO 294-1:1996.
**Tensile Modulus:** The tensile modulus is measured at 23 °C according to ISO 527-1 (cross head speed 1 mm/min) using injection moulded specimens according to ISO 527-2(1B), produced according to EN ISO 1873-2 (dog 10 bone shape, 4 mm thickness).
**Impact:** Charpy notched impact strength is determined according to ISO 179 / 1eA at 23 °C by using injection moulded test specimens as described in EN ISO 1873-2 (80 x 10 x 4 mm).
**The hexane extractable fraction** is determined according to FDA method (federal registration, title 21, Chapter 1, part 177, section 1520, s. Annex B) on cast films of 100 µm thickness produced on a monolayer cast film line with a melt temperature of 220°C and a chill roll temperature of 20°C. The extraction was performed at a temperature of 50°C and an extraction time of 30 min.
**Haze:** Haze was determined according to ASTM D 1003-07on 60x60x0.5 mm³ plaques injection moulded in line with EN ISO 1873-2 using a melt temperature of 200°C. **Transparency:** Transparency was determined according to ASTM D1003-00 on 60x60x0.5 mm³ plaques injection moulded in line with EN ISO 1873-2 using a melt temperature of 200°C.
**Density:** ISO 1183-1 - method A (2004). Sample preparation is done by compression moulding in accordance with ISO 1872-2:2007
**Melting temperature Tm, crystallization temperature Tcr, and the degree of**
**crystallinity:** measured with Mettler TA820 differential scanning calorimetry (DSC) on 3±0.5 mg samples. Both crystallization and melting curves were obtained during 10°C/min cooling and heating scans between 30°C and 225°C. Melting and crystallization temperatures were taken as the peaks of endotherms and exotherms. The degree of crystallinity was calculated by comparison with heat of fusion of a perfectly crystalline polypropylene, i.e. 209 J/g (ISO 11357-3).
**Experimental Part:**

**Table 1: Composition**

| Component* | | **CE1** | **IE1** | **IE2** |
|---|---|---|---|---|
| HL512FB | [wt.-%] | 56.6 | 59.25 | 69.25 |
| Engage 8401 | [wt.-%] | 14.9 | - | - |
| Versify DE4301 | [wt.-%] | 27.8 | - | - |
| Vistamax 6102 | [wt.-%] | - | 40 | 30 |
| | | | | |
| XCS | [wt.-%] | 37 | 40 | 30 |
| Haze on plaques (60*60*0.5 mm) % | [%] | 40.8 | 41 | 41 |
| Transparency (60*60*0.5 mm) % | [%] | 94 | 92 | 92 |

| | | | | |
|---|---|---|---|---|
| * up to 100 wt.-% are typical additives, like antioxidants | | | | |

IE2 is particularly preferred.

HL512BF is a commercial propylene homopolymer of Borealis AG having a MFR₂ (230 °C) of 1'200 g/10min, a XCS of 2.8 wt.-%, a melting temperature Tm of 158 °C

Vistamaxx 6102 is the commercial ethylene propylene copolymer VISTAMAXX 6102 of Exxon Mobil with an MFR₂ (230°C) of 3.0 g/10min, an ethylene content of 16.0 wt.-% and a shore A hardness measured according to ASTM D2240 of 67.
Engage 8401 1 is a commercial ethylene-octene copolymer the Dow Chemical Company having a MFR₂ (190°C) of 30 g/10min, a octane content of 31 wt.-%, and a density measured according to ASTM D792 of 0.885 g/cm³.
Versify DE4301 is an elastomer of the Dow Chemical Company having a MFR₂ (230°C) of 25 g/10min, a density measured according to ASTM D792 of 0.868 g/cm and a shore A hardness measured according to ASTM D2240 of 84.

**Table 2: Properties**

| | | **CE 1** | **IE 1** | **IE 2** |
|---|---|---|---|---|
| MFR₂ (230°C) | [g/10min] | 232 | 136 | 208 |
| MFR₂ (190°C) | [g/10min] | 88 | 52 | 70 |
| Hexan solubles | [wt.-%] | 7.3 | 5.6 | 4.4 |
| XCS | [wt.-%] | 37 | 38 | 30 |
| Tensile Modulus | [MPa] | 517 | 385 | - |
| Flexural Modulus | [MPa] | 465 | 370 | 484 |
| Impact | [kJ/m²] | 7.7 | 28 | 7.7 |
| Haze | [%] | 41 | 41 | 41 |
| Transperancy | [%] | 94 | 92 | 92 |

The present invention is a two phase blend of a polypropylene homopolymer with high molecular weight thermoplastcic elatsomer. Current composition provides low hexane extractables, while giving an optimum balance of flow, stiffness, softness and transparency. This kind of property profile is key parameter for soft injection moulded tubes, to be used in food packaging applications. The application area can be extended for cosmetic and pharmaceutical applications.

## Claims

1. A polypropylene composition having a melt flow rate MFR₂ (230 °C) measured according to ISO 1133 of at least 85 g/10min, said composition comprises a two phase blend of
(a) a polypropylene homopolymer matrix (PM) having a melt flow rate MFR₂ (230 °C) measured according to ISO 1133 of at least 400 g/10min, and
(b) 25 to 45 wt% of a propylene based thermoplastic elastomer (PTE) having a melt flow rate MFR₂ (230 °C) measured according to ISO 1133 of at most 17 g/10min dispersed in the polypropylene polymer matrix (PM).

2. The polypropylene composition according to claim 1, wherein the composition has n-hexane soluble content of at most 6.8 wt% determined using an extraction temperature of 50°C, and an extraction time of 30 min.

3. The polypropylene composition according to claim 1 or 2, wherein the composition comprises 55 to 75 wt% of the polypropylene homopolymer matrix (PM).

4. The polypropylene composition according to any one of claims 1 to 3, wherein the propylene based thermoplastic elastomer (PTE) has a melt flow rate MFR₂ (230 °C) measured according to ISO 1133 of at most 6.5 g/10min.

5. The polypropylene composition according to any one of claims 1 to 4, wherein the propylene based thermoplastic elastomer (PTE) comprises propylene monomer units and comonomer units selected from ethylene, 1-butene, 1-pentene, 1-hexene, 1-heptene and 1-octene.

6. The polypropylene composition according to any one of claims 1 to 5, wherein the propylene based thermoplastic elastomer (PTE) has a comonomer content, preferably ethylene comonomer content, of 6 to equal or below 25 wt.-%.

7. The polypropylene composition according to any one of claims 1 to 6, wherein the polypropylene homopolymer matrix (PM) has a xylene cold soluble (XCS) fraction measured according to according ISO 16152 (25 °C) of at most of 10 wt%.

8. The polypropylene composition according to any one of claims 1 to 6, wherein the polypropylene homopolymer matrix (PM) has a monomodal molecular weight distribution.

9. A process for the preparation of the polypropylene composition according to one of the preceding claims, wherein
the polypropylene homopolymer matrix (PM), the propylene based thermoplastic elastomer (PTE), and optionally one or more additives are extruded in an extruder obtaining thereby the polypropylene composition according to one of the preceding claims.

10. Article comprising a polypropylene composition according to one of claims 1 to 8.

11. Article according to claim 10 being an injection molded article.

## Patentansprüche

1. Polypropylenzusammensetzung mit einer Schmelzflussrate MFR₂ (230°C), gemessen gemäß ISO 1133, von mindestens 85 g/10min, wobei die Zusammensetzung ein zweiphasiges Gemisch umfasst von
(a) einer Polypropylenhomopolymermatrix (PM) mit einer Schmelzflussrate MFR₂ (230°C), gemessen gemäß ISO 1133, von mindestens 400 g/10min und
(b) 25 bis 45 Gew.% eines thermoplastischen Elastomers auf Propylenbasis (PTE) mit einer Schmelzflussrate MFR₂ (230°C), gemessen gemäß ISO 1133, von höchstens 17 g/10min, welches in der Polypropylenpolymermatrix (PM) dispergiert ist.

2. Polypropylenzusmmensetzung gemäß Anspruch 1, wobei die Zusammensetzung n-Hexan lösliche Bestandteile von höchstens 6,8 Gew.% aufweist, bestimmt unter Verwendung einer Extraktionstemperatur von 50°C und einer Extraktionszeit von 30 Minuten.

3. Polypropylenzusammensetzung gemäß Anspruch 1 oder 2, wobei die Zusammensetzung 55 bis 75 Gew.% der Polypropylenhomopolymermatrix (PM) umfasst.

4. Polypropylenzusammensetzung gemäß irgendeinem der Ansprüche 1 bis 3, wobei das thermplastische Elastomer auf Propylenbasis (PTE) eine Schmelzflussrate MFR₂ (230°C), gemessen gemäß ISO 1133, von höchstens 6,5 g/10min aufweist.

5. Polypropylenzusammensetzung gemäß irgendeinem der Ansprüche 1 bis 4, wobei das thermoplastische Elastomer auf Propylenbasis (PTE) Propylenmonomereinheiten und Comonomereinheiten, ausgewählt aus Ethylen, 1-Buten, 1-Penten, 1-Hexen, 1-Hepten und 1-Octen, umfasst.

6. Polypropylenzusammensetzung gemäß irgendeinem der Ansprüche 1 bis 5, wobei das thermoplastische Elastomer auf Propylenbasis (PTE) einen Comonomergehalt, vorzugsweis Ethylencomonomergehalt, von 6 bis gleich oder weniger als 25 Gew.% aufweist.

7. Polypropylenzusammensetzung gemäß irgendeinem der Ansprüche 1 bis 6, wobei die Polypropylenhomopolymermatrix (PM) eine in Xylol kaltlösliche (XCS) Fraktion, gemessen gemäß ISO 16152 (25°C) von höchstens 10 Gew.% aufweist.

8. Polypropylenzusammensetzung gemäß irgendeinem der Ansprüche 1 bis 6, wobei die Polypropylenhomopolymermatrix (PM) eine monomodale Molekulargewichtsverteilung aufweist.

9. Verfahren zur Herstellung der Polypropylenzusammensetzung nach einem der vorstehenden Ansprüche, wobei die Polypropylenhomopolymermatrix (PM), das thermplastische Elastomer auf Propylenbasis (PTE), und gegebenenfalls eines oder mehrere Additive in einem Extruder extrudiert werden, wodurch die Polypropylenzusammensetzung gemäß einem der vorstehenden Ansprüche erhalten wird.

10. Gegenstand, umfassend eine Polypropylenzusammensetzung gemäß einem der Ansprüche 1 bis 8.

11. Gegenstand gemäß Anspruch 10, welcher ein Spritzgussgegenstand ist.

## Revendications

1. Composition de polypropylène présentant un indice de fluage MFR₂ (230°C), mesuré conformément à la norme ISO 1133, d'au moins 85 g/10 min, ladite composition comprenant un mélange à deux phases comprenant
(a) une matrice d'homopolymère de polypropylène (PM) présentant un indice de fluage MFR₂ (230°C), mesuré conformément à la norme ISO 1133, d'au moins 400 g/10 min, et
(b) 25 à 45 % en poids d'un élastomère thermoplastique à base de propylène (PTE) présentant un indice de fluage MFR₂ (230°C), mesuré conformément à la norme ISO 1133, d'au plus 17 g/10 min, dispersés dans la matrice de polymère de polypropylène (PM).

2. Composition de polypropylène selon la revendication 1, laquelle composition présente une teneur en composés solubles dans le n-hexane, déterminée par utilisation d'une température d'extraction de 50°C et d'un temps d'extraction de 30 minutes, d'au plus 6,8 % en poids.

3. Composition de polypropylène selon la revendication 1 ou 2, laquelle composition comprend 55 à 75 % en poids de la matrice d'homopolymère de polypropylène (PM).

4. Composition de polypropylène selon l'une quelconque des revendications 1 à 3, dans laquelle l'élastomère thermoplastique à base de propylène (PTE) présente un indice de fluage MFR₂ (230°C), mesuré conformément à la norme ISO 1133, d'au plus 6,5 g/10 min.

5. Composition de polypropylène selon l'une quelconque des revendications 1 à 4, dans laquelle l'élastomère thermoplastique à base de propylène (PTE) comprend des motifs monomères de propylène et des motifs comonomères choisis parmi l'éthylène, le 1-butène, le 1-pentène, le 1-hexène, le 1-heptène et le 1-octène.

6. Composition de polypropylène selon l'une quelconque des revendications 1 à 5, dans laquelle l'élastomère thermoplastique à base de propylène (PTE) présente une teneur en comonomère, de préférence une teneur en comonomère d'éthylène, de 6 à 25 % en poids ou moins.

7. Composition de polypropylène selon l'une quelconque des revendications 1 à 6, dans laquelle la matrice d'homopolymère de polypropylène (PM) présente une fraction soluble dans le xylène froid (XCS), mesurée conformément à la norme ISO 16152 (25°C), d'au plus 10 % en poids.

8. Composition de polypropylène selon l'une quelconque des revendications 1 à 6, dans laquelle la matrice d'homopolymère de polypropylène (PM) présente une distribution monomodale des masses moléculaires.

9. Procédé pour la préparation de la composition de polypropylène selon l'une des revendications précédentes, dans lequel la matrice d'homopolymère de polypropylène (PM), l'élastomère thermoplastique à base de propylène (PTE), et éventuellement un ou plusieurs additif(s), sont extrudés dans une extrudeuse, en donnant ainsi la composition de polypropylène selon l'une des revendications précédentes.

10. Article comprenant une composition de polypropylène selon l'une des revendications 1 à 8.

11. Article selon la revendication 10, qui est un article moulé par injection.
